Europäisches Patentamt

European Patent Office

Office européen des brevets

(19)

(11) **EP 1 460 705 A1**

## (12) EUROPEAN PATENT APPLICATION
published in accordance with Art. 158(3) EPC

(43) Date of publication:
**22.09.2004 Bulletin 2004/39**

(21) Application number: **02793370.4**

(22) Date of filing: **25.12.2002**

(51) Int Cl.⁷: **H01M 8/06**, H01M 8/10,
H01M 4/92

(86) International application number:
**PCT/JP2002/013493**

(87) International publication number:
**WO 2003/056649 (10.07.2003 Gazette 2003/28)**

(84) Designated Contracting States:
**AT BE BG CH CY CZ DE DK EE ES FI FR GB GR
IE IT LI LU MC NL PT SE SI SK TR**
Designated Extension States:
**AL LT LV MK RO**

(30) Priority: **27.12.2001 JP 2001397958**

(71) Applicant: **Daihatsu Motor Co., Ltd.
Ikeda-shi, Osaka 563-0044 (JP)**

(72) Inventors:
• **TANAKA, Hirohisa
Ikeda-shi, Osaka 563-8651 (JP)**
• **YAMADA, Koji
Ikeda-shi, Osaka 563-8651 (JP)**
• **ASAZAWA, Koichiro
Ikeda-shi, Osaka 563-8651 (JP)**

(74) Representative: **Schwabe - Sandmair - Marx
Patentanwälte
P.O. Box 860245
81629 München (DE)**

### (54) FUEL CELL

(57)    In order to provide a fuel cell that can allow the direct supply of fuel and also can effectively generate electric power with a simple structure, a cell of the fuel cell is so constructed that a proton-shift medium comprising a solid polymer membrane and the like is interposed between a fuel-side electrode and an oxygen-side electrode, and a fuel comprising a compound containing at least hydrogen and nitrogen, such as hydrazine, is supplied directly to the fuel-side electrode.

F I G .  1

EP 1 460 705 A1

**Description**

Technical Field

The present invention relates to a fuel cell and, more particularly, to a direct fuel-supply fuel cell which is designed to supply fuel directly to a fuel-side electrode.

Background Art

A variety of fuel cells, such as an alkaline fuel cell (AFC), a polymer electrolyte fuel cell (PEFC), a phosphoric-acid fuel cell (PAFC), a molten carbonate fuel cell (MCFC), and a solid-oxide fuel cell (SOFC), have been known hitherto.
Of these fuel cells, the alkaline fuel cell and the polymer electrolyte fuel cell can be operated at a relatively low temperature. In view of this, consideration is now being made on their uses in various applications and purposes.
The alkaline fuel cell using e.g. ammonium or hydrazine as the fuel is designed to shift OH⁻ in a dense KOH solution to produce an electromotive force (e.g. Japanese Laid-open (Unexamined) Patent Publication No. 57-176672). However, it is not suitable for practical use, in terms of inconvenience to handle the dense KOH solution and corrosion stemming therefrom, and thus is not developed so extensively at the present time.
On the other hand, the polymer electrolyte fuel cell usually has the structure wherein a fuel-side electrode and an oxygen-side electrode are placed opposite to each other so that a solid polymer membrane can be sandwiched therebetween. Hydrogen is supplied to the fuel-side electrode and the air is supplied to the oxigen-side electrode, to produce protons $H^+$ and electrons $e^-$ from the hydrogen. The protons $H^+$ produced are forced to pass through the solid polymer membrane and shift to the oxygen-side electrode and also the electrons $e^-$ produced are forced to pass through an external circuit and shift to the oxygen-side electrode, then allowing these protons and electrons to react with the oxygen at the oxygen-side electrode to thereby produce water. As a result, an electromotive force is produced by the electrochemical reaction. This polymer electrolyte fuel cell is being developed extensively in the applications to power supplies for electrical products, for houses and buildings, or for stores and offices, as well as in the automotive application.
For example, when the polymer electrolyte fuel cell is used in the automotive application, high-pressure hydrogen or liquefied hydrogen is used practically. However, since the high-pressure hydrogen is low in filling density, an automotive vehicle can only cruise for a short distance. On the other hand, the liquefied hydrogen involves a loss problem by boil-off. In light of these problems, a proposal has been made that e.g. methanol is used as the fuel and after the methanol is reformed to produce hydrogen continuously, the produced hydrogen is supplied to the fuel-side electrode. However, the reform of methanol requires a high-temperature reforming device and incidental facilities, such as a CO eliminator, because a large amount of CO which is a poisoning component of catalyst for an electrode of fuel cell is generated when the methanol is reformed, thus complicating a fuel cell system. Accordingly, this proposal is not considered to have any practical use in terms of space and cost.
In recent years, a direct methanol fuel cell (DMFC) which is designed to supply methanol directly to the fuel-side electrode has been being developed. In the direct methanol fuel cell, a water-methanol solution is supplied directly to the fuel-side electrode, to promote the reaction of the formula (1) given below by a catalyst at the fuel-side electrode.

$$CH_3OH+H_2O \rightarrow CO_2+6H^++6e^- \tag{1}$$

Also, the air is supplied to the oxygen-side electrode, to allow the protons $H^+$ and electrons $e^-$, which were produced in accordance with the above-said formula (1) and passed through the solid polymer membrane and the external circuit, respectively, to react with the oxygen at the oxygen-side electrode, as shown in the formula (2) given below, to thereby produce water. As a result, an electromotive force is generated by the electrochemical reaction.

$$3/2O_2+6H^++6e^- \rightarrow 3H_2O \tag{2}$$

This direct methanol fuel cell can eliminate the need of providing the reforming device and the incidental facilities, such as the CO eliminator, thus achieving reduction in size and weight of the fuel cell and reduction in cost of the same. Accordingly, its use in the automotive application and in the applications to electric products, portable type ones, in particular, is being expected.
However, the direct methanol fuel cell suffers from the disadvantage that the catalyst is poisoned by the CO produced secondarily by the catalyzed reaction at the fuel-side electrode, making it hard to achieve improved power generation efficiency. It also produces $CO_2$ inevitably, thus providing the disadvantage, from the viewpoints of global warming and the like, of imposing burdens on the environment.

It is an object of the present invention to provide a fuel cell that can allow the direct supply of the fuel easy to handle and high in filling density of hydrogen and also can effectively generate electric power with a simple structure.

Disclosure of the Invention

The present invention is directed to a fuel cell which comprises a cell of the fuel cell having a proton-shift medium interposed between a fuel-side electrode and an oxygen-side electrode and is so constructed that a fuel comprising a compound containing at least hydrogen and nitrogen is supplied directly to the fuel-side electrode.

In the fuel cell of the present invention, it is preferable that the number of carbon of the compound is 3 or less.

In the fuel cell of the present invention, it is preferable that the compound comprises an element including no carbon.

In the fuel cell of the present invention, it is preferable that the proton-shift medium is solid, gel, or sol.

In the fuel cell of the present invention, it is preferable that the fuel comprises a compound including no carbon, and water.

In the fuel cell of the present invention, it is preferable that the fuel-side electrode includes hydrophilic catalyst.

In the fuel cell of the present invention, it is preferable that the hydrophilic catalyst is micronized metal.

In the fuel cell of the present invention, it is preferable that the hydrophilic catalyst is Pt black and/or Pd black and is used in a current density zone of less than $150mA/cm^2$.

In the above construction, it is preferable that the hydrophilic catalyst is Pt black having a specific surface area of not more than $25m^2/g$ or Pd black having a specific surface area of not more than $70m^2/g$.

In the fuel cell of the present invention, it is preferable that the hydrophilic catalyst is at least one micronized metal selected from the group consisting of Rh, Ir, Pt and Ru and is used in a current density zone of not less than $150mA/cm^2$.

In the above construction, it is preferable that the hydrophilic catalyst is Rh black having a specific surface area of not less than $9m^2/g$, Ir black having a specific surface area of not less than $2.9m^2/g$, Pt black having a specific surface area of not less than $33.8m^2/g$, or Pt-Ru black having a specific surface area of not less than $1.4m^2/g$.

Brief Description of the Drawings

FIG. 1 is a block schematic diagram showing an embodiment of a fuel cell (single-cell structure) of the present invention;

FIG. 2 is a correlation diagram showing a relation between the concentration of an aqueous solution of hydrazine and the generated voltage;

FIG. 3 is a correlation diagram showing a relation between the temperature of the aqueous solution of hydrazine and the generated voltage;

FIG. 4 is a correlation diagram showing a relation between the pressure of the aqueous solution of hydrazine and the generated voltage;

FIG. 5 is a correlation diagram showing a relation between the concentration of hydrazine contained in a methanol-aqueous solution of hydrazine and the generated voltage;

FIG. 6 is a correlation diagram showing a relation between the concentration of an aqueous solution of ammonia and the generated voltage;

FIG. 7 is a correlation diagram showing a relation between the current density and the generated voltage in comparison between hydrophilic catalyst and hydrophobic catalyst;

FIG. 8 is a correlation diagram showing relations between the current density and the generated voltage in comparison between metal blacks of high specific surface area;

FIG. 9 is a diagram showing a change of the generated voltage of Rh black relative to the specific surface area of the same at the current density of $200mA/cm^2$;

FIG. 10 is a diagram showing a change of the generated voltage of Ir black relative to the specific surface area of the same at the current density of $200mA/cm^2$;

FIG. 11 is a diagram showing a change of the generated voltage of Pt black relative to the specific surface area of the same at the current density of $200mA/cm^2$;

FIG. 12 is a diagram showing a change of the generated voltage of Pt-Ru black relative to the specific surface area of the same at the current density of $200mA/cm^2$;

FIG. 13 is a correlation diagram showing relations between the current density and the generated voltage in comparison between metal blacks of low specific surface area;

FIG. 14 is a diagram showing a change of the open·circuit voltage of Pt black relative to the specific surface area of the same in the open-circuit condition; and

FIG. 15 is a diagram showing a change of the open-circuit voltage of Pd black relative to the specific surface area of the same in the open·circuit condition.

Best Mode for Carrying out the Invention

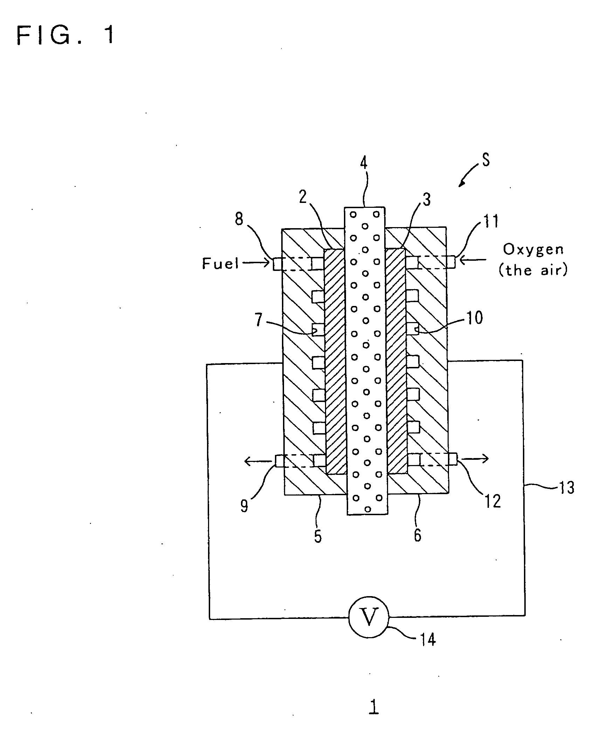

FIG. 1 is a block schematic diagram showing an embodiment of a fuel cell of the present invention. In FIG. 1, the fuel cell 1 comprises a cell S of the fuel cell comprising a fuel-side electrode 2, an oxygen-side electrode 3, and a proton-shift medium 4. The fuel-side electrode 2 and the oxygen-side electrode 3 are disposed opposite to each other in such a relation as to interpose the proton-shift medium 4 therebetween.

The fuel-side electrode 2 is in the form of a porous electrode of e.g. carbon on which a catalyst is supported and the like, though not particularly limited thereto, and is in contact with one surface of the proton-shift medium 4.

The catalyst used is not limited to any particular one, as long as it has a catalysis to produce protons $H^+$ and electrons $e^-$ from the fuel, as described later. For example, the elements of the group VIII of the periodic table, such as the elements of the platinum group (Ru, Rh, Pd, Os, Ir, Pt) and the elements of the iron group (Fe, Co, Ni), the elements of the group Ib of the periodic table, such as Cu, Ag, Au, and combinations thereof are used. Pt, Pd and Ni are preferably used. In the case where Co is produced secondarily by the kind of the fuel, Ru may be used in combination with the elements selected, to prevent the catalyst from being poisoned by the CO. These catalysts are supported on the porous electrode by a known method. An amount of catalyst supported is, for example, in the range of 0.1 to 5.0mg/$cm^2$, or preferably 0.1 to 1.0mg/$cm^2$.

The oxygen-side electrode 3 is also in the form of a porous electrode on which a catalyst is supported, as is the case with the above-said electrode, though not particularly limited thereto, and is in contact with the other surface of the proton-shift medium 4. An amount of catalyst supported on the oxygen-side electrode 3 is, for example, in the range of 0.1 to 5.0mg/$cm^2$, or preferably 0.1 to 1.0mg/$cm^2$.

The oxygen supplied to the oxygen-side electrode 3 and the protons $H^+$ and electrons $e^-$ as passed through the proton-shift medium 4 and the external circuit 13 respectively are allowed to react with each other at the oxygen side electrode 3, to thereby produce water, as described later.

The proton-shift medium 4 is not limited to any particular one, as long as it is the medium for allowing the shift of the protons $H^+$ produced from the fuel. For example, solid substances, such as solid polymer membrane, zeolite, ceramics, and glass, or substances that can be handled in the same manner as the solid substances, such as gels or sols, are preferably used. To be more specific, the solid polymer membrane is preferably used as the proton-shift medium 4. Using the solid substance, or the gel or the sol that can be handled in the same manner as the solid substance as the proton-shift medium 4, can makes it hard to shift the fuel from the fuel-side electrode 2 to the oxygen-side electrode 3.

For example, a proton-conductive ion-exchange membrane, such as a perfluorosulfonic acid membrane (e. g. Nafion ® available from DuPont), is used as the solid polymer membrane. A cell size of the solid polymer membrane is properly selected, depending on its intended purposes and applications. The solid polymer membrane has a thickness in the range of e.g. 10-500μm, or preferably 20-200μm.

The cell S of the fuel cell further comprises a fuel supply member 5 and an oxygen supply member 6. The fuel supply member 5 is made of a gas-impermeable conductive member and is placed opposite to the fuel-side electrode 2 with its one surface contacting therewith. Also, the fuel supply member 5 has a fuel-side flow path 7 formed to allow the fuel to contact with the entire fuel-side electrode 2. The fuel-side flow path 7 has a fuel supply port 8 and a fuel drain port 9 which are formed to pass through the fuel supply member 5 and be continuous with the fuel-side flow path 7 at an end portion thereof on an upstream side and at an end portion thereof on a downstream side, respectively.

Also, the oxygen supply member 6 is made of a gas-impermeable conductive member and is placed opposite to the oxygen-side electrode 3 with its one surface contacting therewith, as is the case with the fuel supply member 5. Also, the oxygen supply member 6 has an oxygen-side flow path 10 formed to allow the oxygen (the air) to contact with the entire oxygen-side electrode 3. The oxygen-side flow path 10 has an oxygen supply port 11 and an oxygen drain port 12 which are formed to pass through the oxygen supply member 6 and be continuous with the oxygen-side flow path 10 at an end portion thereof on an upstream side and at an end portion thereof on a downstream side, respectively.

This cell S of the fuel cell may have basically the same construction as a known single cell of the direct methanol fuel cell. In other words, the known single cell of the direct methanol fuel cell can be used as the cell S of this fuel cell.

In practice, this fuel cell 1 is in the form of a stack structure wherein a plurality of above mentioned cells S of the fuel cell are laminated in layers, as is the case with the direct methanol fuel cell. For this, the fuel supply member 5 and oxygen supply member 6 are practically constructed as a separator having the fuel-side flow path 7 and oxygen-side flow path 10 at both sides thereof. This means that a known direct methanol fuel cell can be used as the fuel cell 1.

The fuel cell 1 is provided with a power collection board formed of conductive material and is constructed so that an electromotive force produced in the fuel cell 1 can be taken out from a terminal of the power collection board, though not shown.

Also, in examples mentioned later, the fuel supply member 5 and the oxygen supply member 6 of the cell S of the fuel cell are connected with each other through an external circuit 13, and a voltmeter 14 is provided in the external circuit 13 to measure the generated voltage.

In the present invention, the fuel comprising a compound containing at least hydrogen and nitrogen (hereinafter it is referred to as "fuel compound") is supplied directly without going through any reforming process and the like.

In this fuel compound, it is preferable that the number of carbon is not more than 3; that hydrogen is bonded directly to nitrogen; that the fuel compound includes a nitrogen-nitrogen bond; and that the fuel compound does not include a carbon-carbon bond. Also, it is preferable that the number of carbon is the smallest possible number (no carbon (zero) is included, if possible).

The direct bonding of hydrogen to nitrogen can produce the protons $H^+$ easily to generate electric power efficiently. Also, the presence of the nitrogen-nitrogen bonding can produce nitrogen ($N_2$) easily by the catalyzed reaction to prevent the catalyst from being poisoned. In addition, the presence of the carbon-carbon bonding can make it hard to decompose the fuel compound to cause the poisoning of the catalyst. Also, the more the number of carbon become, the more CO and $CO_2$ are produced. This causes the poisoning of the catalyst and also produces undesirable results from the viewpoint of environmental burdens.

This fuel compound may include an oxygen atom and a sulfur atom within the limits within which its performance is not hindered. To be more specific, it may include those atoms in the form of a carbonyl group, a hydroxyl group, hydrate, sulfonic acid group, or a sulfate salt.

From this viewpoint, for example, hydrazines, such as hydrazine ($NH_2NH_2$), hydrazine hydrate ($NH_2NH_2 \cdot H_2O$), hydrazine carbonate (($NH_2NH_2)_2CO_2$), hydrazine sulfate ($NH_2NH_2 \cdot H_2SO_4$), mono methyl hydrazine ($CH_3NHNH_2$), dimethyl hydrazine (($CH_3)_2NNH_2$,$CH_3NHNHCH_3$), and carbonhydrazide (($NHNH_2)_2CO$), heterocyclics, such as, e.g. urea ($NH_2CONH_2$), e.g. ammonia ($NH_3$), e.g. imidazole, 1,3,5·triazine and 3-amino-1,2,4-triazole, and hydroxylamines, such as hydroxylamine ($NH_2OH$) and hydroxylamine sulfate ($NH_2OH \cdot H_2SO_4$), are used as the fuel compound of the present invention. These fuel compounds may be used singly or in combination of two or more. Preferably, hydrazines and ammonia are used.

Although the fuel compound may be used as the fuel as it is, it may alternatively be used in the form of solution of e.g. water and/or alcohol (lower alcohol, such as methanol, ethanol, propanol and isopropanol). In this case, concentration of the fuel compound contained in the solution is in the range of e.g. 1-90 weight%, or preferably 1-30 weight%, though it depends on the kind of fuel compound.

When the fuel is prepared as methanol solution or water/methanol solution of the fuel compound, the cell S of the fuel cell can be constructed to have the same structure as the single cell of the methanol fuel cell. This can allow the protons $H^+$ and the electrons $e^-$ to be produced not only from the fuel compound but also from the methanol, to thereby generate the electromotive force.

Also, when the fuel is prepared as the water/methanol solution of the fuel compound, it is preferable that concentration of the water contained in the solution is in the range of 1-98 weight%, or preferably 60-97 weight%, and concentration of the alcohol contained in the solution is in the range of 1-30 weight%, or preferably 2-10 weight%.

Further, the fuel can be used as the fuel compound in the form of gas (e.g. vapor).

When the fuel is supplied to the fuel-side flow path 7 in the fuel supply member 5 while the oxygen (the air) is supplied to the oxygen-side flow path 10 in the oxygen supply member 6, the fuel compound included in the fuel is put into contact with the fuel-side electrode 2 and is dissolved into hydrogen and nitrogen (CO, $CO_2$, etc. may be produced concurrently, depending on the kind of the fuel compound). Then, the protons $H^+$ and the electrons $e^-$ are produced from the hydrogen. The protons $H^+$ pass through the proton-shift medium 4 and shift to the oxygen-side electrode 3, and the electrons $e^-$ pass through the external circuit 13 and shift to the oxygen-side electrode 3. These protons and electrons react with the oxygen at the oxygen-side electrode 3 to produce water and resultantly an electromotive force is generated by electrochemical reaction.

To be more specific, for example, when hydrazine is used as the fuel compound, the reaction of the formula (3) given below is promoted by the catalyst at the fuel-side electrode 2.

$$NH_2NH_2 \rightarrow N_2 + 4H^+ + 4e^- \tag{3}$$

Also, the protons $H^+$ and electrons $e^-$, which were produced in accordance with the above-said formula (3) and passed through the proton shift medium 4 and the external circuit 13, respectively, are allowed to react with oxygen at the oxygen-side electrode 3, as shown in the formula (4) given below, to thereby produce water. As a result, an electromotive force is generated by the electrochemical reaction.

$$O_2 + 4H^+ + 4e^- \rightarrow 2H_2O \tag{4}$$

Thus, when hydrazine is used as the fuel compound, the hydrogen-nitrogen bonding and the nitrogen-nitrogen bonding of the hydrazine can facilitate the production of nitrogen ($N_2$) and protons $H^+$ by the catalyzed reaction, thus generating electric power efficiently, while preventing the catalyst from being poisoned. Besides, since hydrazine includes no carbon, neither CO nor $CO_2$ is produced at the fuel-side electrode 2 but only $N_2$ is produced thereat. Due to this, the catalyst is prevented from being poisoned, thus achieving improved durability and further achieving substantially zero emission.

Of the fuel compounds cited above, the compounds including no carbon, i.e., hydrazine ($NH_2NH_2$), hydrazine hydrate ($NH_2NH_2 \cdot H_2O$), hydrazine sulfate ($NH_2NH_2 \cdot H_2SO_4$), ammonia ($NH_3$), hydroxylamine ($NH_2OH$) and hydroxylamine sulfate ($NH_2OH \cdot H_2SO_4$), produce neither CO nor $CO_2$, when prepared as the fuel using water (aqueous solution or vapor) in particular, as is the case with the reaction of hydrazine. Due to this, the catalyst is prevented from being poisoned, thus achieving improved durability and further achieving substantially zero emission.

On the other hand, even the compounds including carbon, namely, hydrazine carbonate (($NH_2NH_2$)$_2CO_2$), mono methyl hydrazine ($CH_3NHNH_2$), dimethyl hydrazine (($CH_3$)$_2NNH_2$,$CH_3NHNHCH_3$), carbonhydrazide (($NHNH_2$)$_2CO$), urea ($NH_2CONH_2$), imidazole, 1,3,5-triazine, and 3-amino-1,2,4-triazole can reduce the poisoning of the catalyst and the environmental burdens and can generate electric power efficiently.

Accordingly, the selection of the fuel compounds in the fuel supplied and the preparation of water solution thereof, alcoholic solution thereof or alcohol/water solution thereof, or the preparation of those in the form of gas may be suitably determined in consideration of the intended purposes and applications, convenience to handle and store the fuels, and infrastructure (e.g. fuel-supply facilities).

The operating conditions of this fuel cell 1 may be set to be practically identical with those of the direct methanol fuel cell, without any particular limitation. For example, the pressure applied to the fuel-side electrode 2 is set to be not more than 200kPa, or preferably in the range of 0-100kPa, the pressure applied to the oxygen-side electrode 3 is set to be not more than 200kPa, or preferably in the range of 50-150kPa, and the temperature of the cell S of the fuel cell is set to be in the range of 40-120°C, or preferably 60-100°C.

Although the construction wherein the catalyst is supported on hydrophobic carbon or the like in the fuel-side electrode 2 has been described above, it is preferable that in place of the above-said carbon supported catalyst, a hydrophilic catalyst is included in the fuel-side electrode 2. The hydrophilic catalyst included in the fuel-side electrode 2 can allow the fuel and the fuel-side electrode 2 to contact with each other more effectively than the hydrophobic-carbon supported catalyst can.

The hydrophilic catalysts that may be used include, for example, the above-cited metal supported on supporting material comprising carbon treated to be hydrophilic, and micronized metal which is not supported on the supporting material.

The micronized metal is called "metal black" (micronized back metal), which can be defined, for example, as the micronized metal of which primary diameter has a mean particle diameter of not more than 1μm. The mean particle diameter defined herein is a crystallite diameter measured by a X-ray diffraction method or a mean particle diameter of the primary diameter determined by an observation of the forms of the micronized metal with a transmission electron microscope. Although a particle diameter determined by a precipitation method, such as a laser diffraction method, shows a larger value because of aggregation of the primary particles, the mean particle diameter defined herein is not intended to include such particle diameter.

The metals that may be used as the micronized metal (hereinafter it is referred to as "metal black") include, for example, Pt (platinum), Pd (palladium), Rh (rhodium), Ir (iridium), Ru (ruthenium) and combination thereof.

Of these metal blacks, Pt black and Pd black are preferably used in the current density zone as low as less than 150mA/cm$^2$.

In this case, Pt black having a specific surface area of not more than 25m$^2$/g, or preferably in the range of 3-18m$^2$/g, and Pd black having a specific surface area of not more than 70m$^2$/g, or preferably in the range of 4-40m$^2$/g, are preferably used. The use of these metal blacks in the low current density zone can generate high output power.

Thus, the fuel cell 1 using the metal black that can generate high output power in the low current density zone as the hydrophilic catalyst is suitably applicable to devices for which high output power must be generated with a low current, including compact electric/electronic devices, such as a mobile phone and a personal computer, and other portable electric products.

Of these metal blacks, Rh black, Ir black, Pt black, Ru black and combinations thereof are preferably used in the current density zone as high as 150mA/cm$^2$ or more. Of these combinations, the combination of Pt with any one of Rh, Ir and Ru, and Pt-Ru black which is the combination of Pt and Ru are preferably used.

In this case, Rh black having a specific surface area of not less than 9m$^2$/g, Ir black having a specific surface area of not less than 2.9m$^2$/g, Pt black having a specific surface area of not less than 33.8m$^2$/g, and Pt-Ru black having a specific surface area of not less than 1.4m$^2$/g are preferably used. The use of these metal blacks in the high current density zone can generate high output power.

Thus, the fuel cell 1 using the metal black that can generate high output power in the high current density zone as the hydrophilic catalyst is suitably applicable to devices for which high output power must be generated with a high current, such as automobile.

Although no particular limitation is imposed to the way of obtaining a metal black having a desirable specific surface area of the metal blacks described above, various metal blacks are heated up to 300-900°C at a temperature rising rate of e.g. 1-50°C/min. in an atmosphere of inert gas, such as nitrogen, and then are held at that temperature for e.g. 0.5-10 hours. In this operation, the temperature rising rate, the retention time and the retention temperature can be suitably selected for obtaining the metal black having a desirable specific surface area.

Although no particular limitation is imposed to the way of making the fuel-side electrode 2 including the metal black in the form of hydrophilic catalyst, for example, forming a membrane-electrode conjunction member is one of the ways. Specifically, the membrane-electrode conjunction member can be formed in the manner that various metal blacks are mixed with electrolyte solution in a mass ratio of e.g. 1:1 to 1:10 and dispersed in the electrolyte solution; then, after a viscosity of the resultant solution is adjusted by mixing a proper quantity of organic solvent such as alcohol, the solution is coated on a surface of the proton-shift medium 4 such as an electrolyte membrane by a known coating method, such as a spray coating; and after dried at room temperature, the membrane is hot-pressed under load of 0.5-2.0t at 50-150°C for 1-20 minutes, to fix the fuel-side electrode 2 to the proton-shift medium 4. The membrane-electrode complex on which the metal black is supported in quantity of e.g. 0.1-5mg/cm$^2$, or preferably 0.5-3mg/cm$^2$, can be formed in this manner.

Examples

In the following, the present invention is described further specifically with reference to Examples. The present invention is not in any manner limited to these Examples.

(1) Relationship between various measurement conditions and generated voltages:

A device having the same construction as that of the fuel cell 1 having the cell S of the fuel cell mentioned above was used for measurements. Also, the fuels recited below were supplied to the device from the supply port 8 of the fuel-side flow path 7 via a pump (Examples 1-4) or an injector (Example 5) and also the oxygen from an oxygen tank (Examples 1-4) or the air from a compressor (Example 5) was supplied to the supply port 11 of the oxygen-side flow path 10 under the conditions given below. The generated voltages were measured with the voltmeter 14.

The specifications of the device were as follows.

> Fuel cell: Polymer electrolyte type
> Cell size: 38mm ø (11cm$^2$)
> Cell number: 1 (Single cell)
> Membrane thickness: 30μm
> Fuel-side electrode: Pt supported on carbon (Quantity of Pt supported: 0.5mg/cm$^2$)
> Oxygen-side electrode: Pt supported on carbon (Quantity of Pt supported: 0.4mg/cm$^2$)

Example 1 (Aqueous solution of hydrazine: Relationship with Concentration)

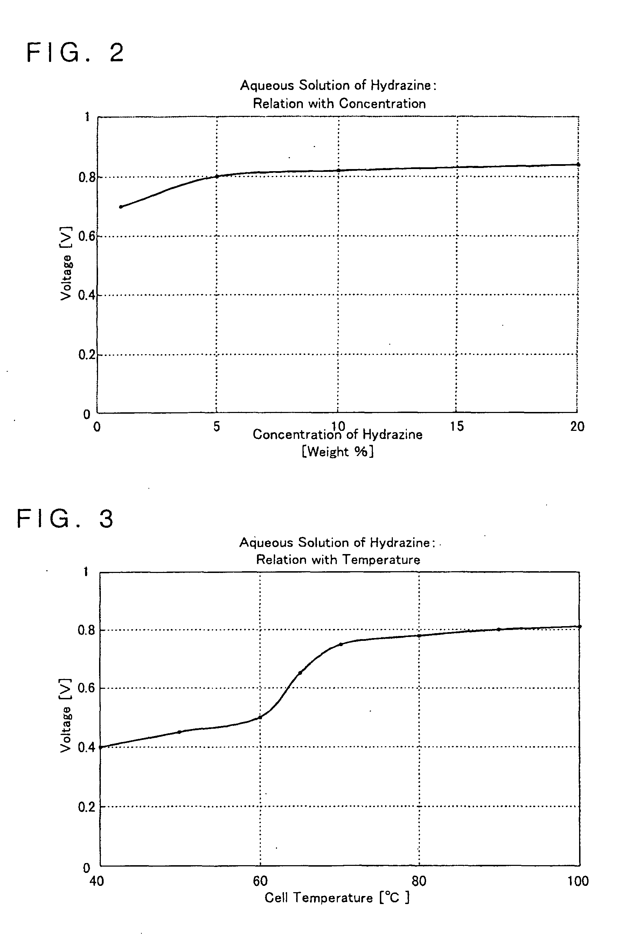

Aqueous solution of 1 weight% hydrazine, aqueous solution of 5 weight% hydrazine, aqueous solution of 10 weight% hydrazine, and aqueous solution of 20 weight% hydrazine were respectively prepared as the fuel, and the generated voltages were measured under the conditions given below. The results are shown in FIG. 2.

> Pressure applied to Fuel-side electrode: 100kPa
> Quantity supplied to Fuel-side electrode: 3mL/min.
> Pressure applied to Oxygen-side electrode: 100kPa
> Quantity supplied to Oxygen-side electrode: 47mL/min.
> Cell temperature: 80°C

Current: 0mA

Example 2 (Aqueous solution of hydrazine: Relationship with Temperature)

Aqueous solution of 5 weight% hydrazine was prepared as the fuel, and the generated voltage was measured every 5°C or 10°C change in cell temperature from 40°C to 100°C. The results are shown in FIG. 3. The remaining measurement conditions were the same as those of Example 1.

Example 3 (Aqueous solution of hydrazine: Relationship with Pressure)

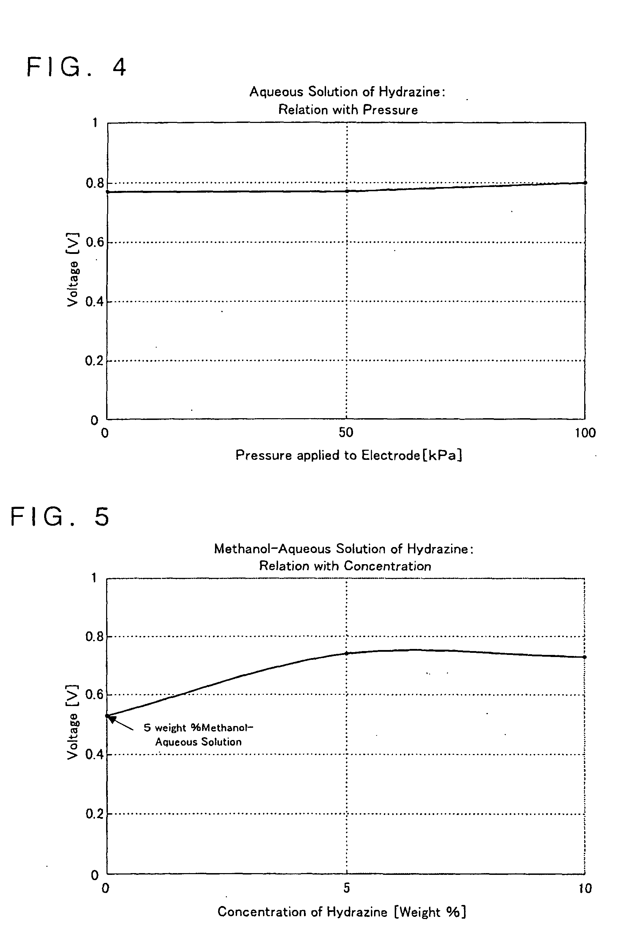

Aqueous solution of 5 weight% hydrazine was prepared as the fuel, and the generated voltage was measured every 0kPA, 50kPa, and 100kPa change in the pressure to the fuel-side electrode and in the pressure to the oxygen-side electrode. The results are shown in FIG. 4. The remaining measurement conditions were the same as those of Example 1.

Example 4 (Methanol-Aqueous solution of hydrazine: Relationship with Concentration)

Aqueous solution comprising 5 weight% hydrazine and 5 weight% methanol, and aqueous solution comprising 10 weight% hydrazine and 5 weight% methanol were respectively prepared as the fuel, and the generated voltages were measured. The results are shown in FIG. 5. The remaining measurement conditions were the same as those of Example 1. In the measurements, the generated voltage of aqueous solution of 5 weight% methanol including no hydrazine was also measured. This result is also shown in FIG. 5.

Example 5 (Aqueous solution of ammonia: Relationship with Concentration)

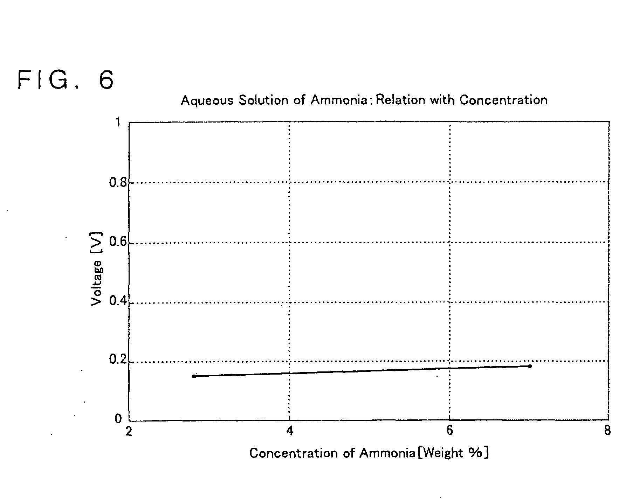

Aqueous solution of 2.8 weight% ammonia and aqueous solution of 7 weight% ammonia were respectively prepared as the fuel, and the generated voltages were measured under the conditions given below. The results are shown in FIG. 6.

Pressure applied to Fuel-side electrode: Nil
Quantity supplied to Fuel-side electrode: 1mL/min.
Pressure applied to Oxygen-side electrode: Nil
Quantity supplied to Oxygen-side electrode: 20mL/min. (Air)
Cell temperature: 80°C
Current: 0mA

(2) Examination of Hydrophilic Catalyst

The device having the same construction as that of the fuel cell 1 having the cell S of the fuel cell mentioned above, except the use of the membrane-electrode complexes produced in Examples 6-11 described next, was used for measurements. Also, aqueous solution of 10 weight% hydrolytic hydrazine was supplied to the device from the supply port 8 of the fuel-side flow path 7 under the conditions given in Examples 6-11 and also saturated vapor humidified to 80°C was supplied to the supply port 11 of the oxygen-side flow path 10. The generated voltages were measured with the voltmeter 14.

In the measurements, pretreatments were carried out to obtain stable performances by supplying hydrogen gas to the fuel-side electrode 2 and also supplying oxygen gas to the oxygen-side electrode 3 to thereby generate electric power for one hour, then supplying the aqueous solution of 10 weight% hydrolytic hydrazine to the fuel-side electrode 2 to thereby generate electric power for another one hour.

Example 6 (Comparison between hydrophilic catalyst and hydrophobic catalyst)

1) Production of membrane-electrode conjunction member A

Pt-Ru black (specific surface area of $67m^2/g$) comprising Pt and Ru mixed in an equal mole ratio of 1:1 was mixed with solution of 5% Nafion ® (available from Aldrich Co.) in a mass ratio of 1:3 and agitated for two hours. Further, it was fully dispersed in the solution by ultrasound to be in the form of an ink. After this solution was prepared to have an adequate viscosity by ethanol, it was coated directly on one surface of the electrolyte membrane 4 of Nifion 117 ® (available from DuPont) by spraying, to form the fuel-side electrode 2 of a quantity of Pt supported $1.12mg/cm^2$ and a

quantity of Ru supported 0.58mg/cm$^2$.

Also, carbon black on which 60 weight% Pt was supported was coated directly on the other surface of the electrolyte membrane 4 by spraying in the same method as that mentioned above, to form the oxygen-side electrode 3 of a quantity of Pt supported 3mg/cm$^2$.

Thereafter, the electrolyte membrane 4 having the fuel-side electrode 2 and the oxygen-side electrode 3 formed on both sides thereof was allowed to stand at room temperature for 30 minutes. Then, it was hot-pressed under load of It at 120°C for five minutes, to fix the respective electrodes to the electrolyte membrane 4 to thereby produce a membrane-electrode conjunction member A.

In the fuel cell 1 using this membrane-electrode conjunction member A, a hydrophilic Ti mesh was used as a power collection member.

2) Production of membrane-electrode conjunction member B

A membrane-electrode conjunction member B was produced in the same method as the method for producing the membrane-electrode conjunction member A, except that carbon black on which 46.5 weight% Pt and 24.0 weight% Ru were supported was coated directly on one surface of the electrolyte membrane 4 by spraying by the same method as that mentioned above to form the fuel-side electrode 2 of a quantity of Pt supported 2.38mg/cm$^2$ and a quantity of Ru supported 1.24mg/cm$^2$.

In the fuel cell 1 using this membrane-electrode conjunction member B, a hydrophobic carbon cloth with a gas diffusion layer was used as the power collection member.

3) Measurement of Generated Voltage

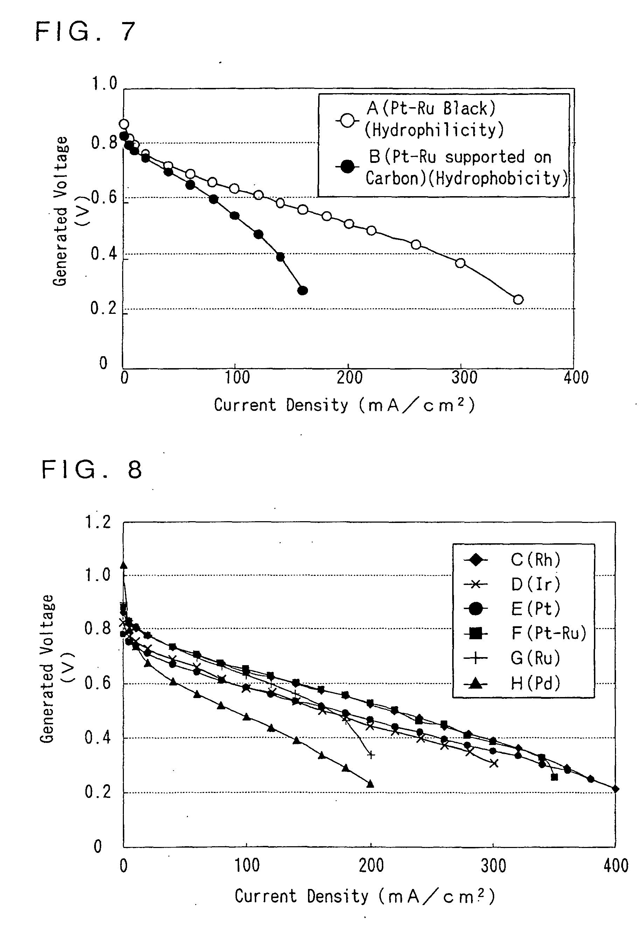

The generated voltage with respect to the current density was measured under the conditions given below using the membrane-electrode conjunction members A and B produced by the methods described above. The results are shown in FIG. 7.

    Pressure applied to Fuel-side electrode: 0kPa
    Quantity supplied to Fuel-side electrode: 2mL/min.
    Pressure applied to Oxygen-side electrode: 50kPa
    Quantity supplied to Oxygen-side electrode: 400mL/min.
    Cell temperature 80°C

It is seen from FIG. 7 that the membrane-electrode conjunction member A using the hydrophilic Pt-Ru black generated at the fuel-side electrode 2 higher voltages in a wider current density zone than the membrane-electrode conjunction member B using the hydrophobic carbon on which Pt-Ru was supported.

Example 8 (Examination of metal black having high specific surface area)

1) Production of membrane-electrode conjunction members C-H

Membrane-electrode conjunction members C-H were produced in the same method as the method for producing the membrane-electrode conjunction member A, except that the fuel-side electrodes 2 and the oxygen-side electrodes 3 were formed in the same method as that described above, using various metal blacks shown in TABLE 1 in quantities of metal blacks supported shown in TABLE 1.

In the fuel cell 1 using these membrane-electrode conjunction members C-H, the Ti mesh was used as the power collection member for the fuel-side electrode 2 and the carbon cloth with a gas diffusion layer was used as the power collection member for the oxygen-side electrode 3.

TABLE 1

| Membrane-electrode conjunction member | Fuel-side electrode | | Oxygen-side electrode |
|---|---|---|---|
| | Metal (Specific surface area (m$^2$/g)) | Quantity supported (mg/cm$^2$) | Quantity of Pt supported (mg/cm$^2$) |
| C | Rh black (29.5) | 2.0 | 3.0 |
| D | Ir black (40.0) | 2.1 | 3.3 |

TABLE 1 (continued)

| Membrane-electrode conjunction member | Fuel-side electrode | | Oxygen-side electrode |
| --- | --- | --- | --- |
| | Metal (Specific surface area ($m^2$/g)) | Quantity supported (mg/$cm^2$) | Quantity of Pt supported (mg/$cm^2$) |
| E | Pt black (35.0) | 1.2 | 3.9 |
| F | Pt·Ru black (31.1) | 1.12(Pt)/0.58(Ru) | 2.6 |
| G | Ru black (31.2) | 2.4 | 2.6 |
| H | Pd black (34.1) | 3.5 | 4.7 |

2) Measurement of Generated Voltage

The generated voltage with respect to the current density was measured under the conditions given below using the membrane·electrode conjunction members C-H. The results are shown in FIG. 8.

Pressure applied to Fuel-side electrode: 0kPa
Quantity supplied to Fuel·side electrode: 2mL/min.
Pressure applied to Oxygen-side electrode: 50kPa
Quantity supplied to Oxygen-side electrode: 400mL/min.
Cell temperature: 80°C

It is seen from FIG. 8 that high voltages were generated in the high current density zone of 150mA/$cm^2$ or more when the metal blacks having high specific surface area, Rh, Ir, Pt, and Pt-Ru, in particular, were used.

Example 9 (Examination of optimum range of specific surface area in high current density zone)

Membrane-electrode conjunction members were produced in the same method as the method of Example 8, using the metal blacks of Rh, Ir, Pt, and Pt-Ru having specific surface areas shown in TABLE 2, respectively.

TABLE 2

| Metal black | Specific surface area ($m^2$/g) | | |
| --- | --- | --- | --- |
| Rh black | 8.3 | 29.5 | 123.8 |
| Ir black | 8.0 | 40.0 | - |
| Pt black | 6.3 | 24.5 | 35.0 |
| Pt-Ru black | 8.3 | 31.1 | - |

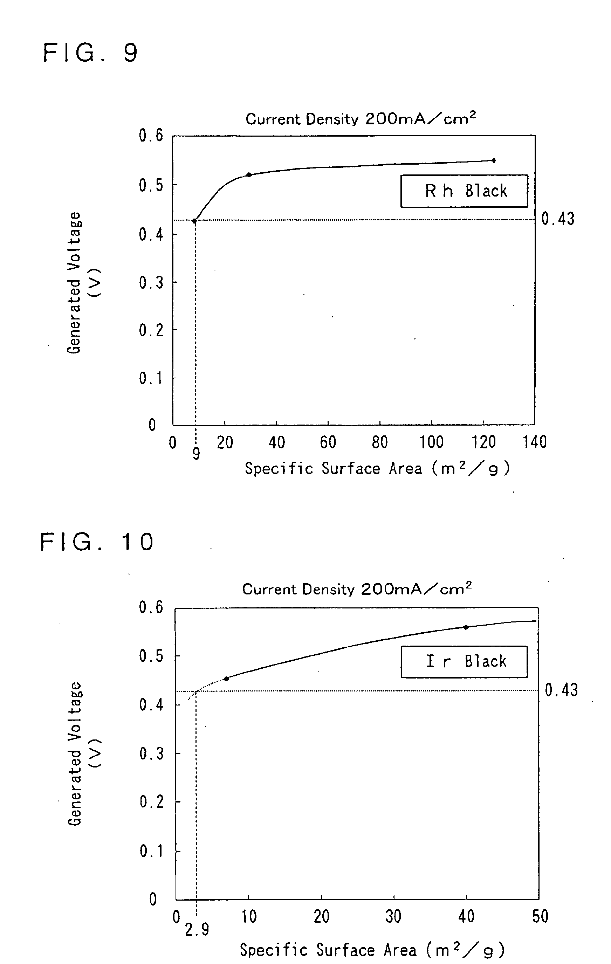

Then, the generated voltages were measured under the same conditions as those of Example 8, except that the current density was held constant at 200mA/$cm^2$, using the membrane-electrode conjunction members produced. The generated voltages with respect to the specific surface areas in the respective metal blacks are shown in FIGS. 9-12.

For reference purpose, the generated voltage of 0.43V obtained at the current density of 200mA/$cm^2$ by a direct methanol fuel cell (DMFC) is shown by a dotted line in FIGS. 9-12.

It is seen from FIG. 9 that a higher voltage than the generated voltage obtained by the direct methanol fuel cell (DMFC) was generated by use of Rh black with a specific surface area of not less than 9$m^2$/g.

It is seen from FIG. 10 that a higher voltage than the generated voltage obtained by the direct methanol fuel cell (DMFC) was generated by use of Ir black with a specific surface area of not less than 2.9$m^2$/g.

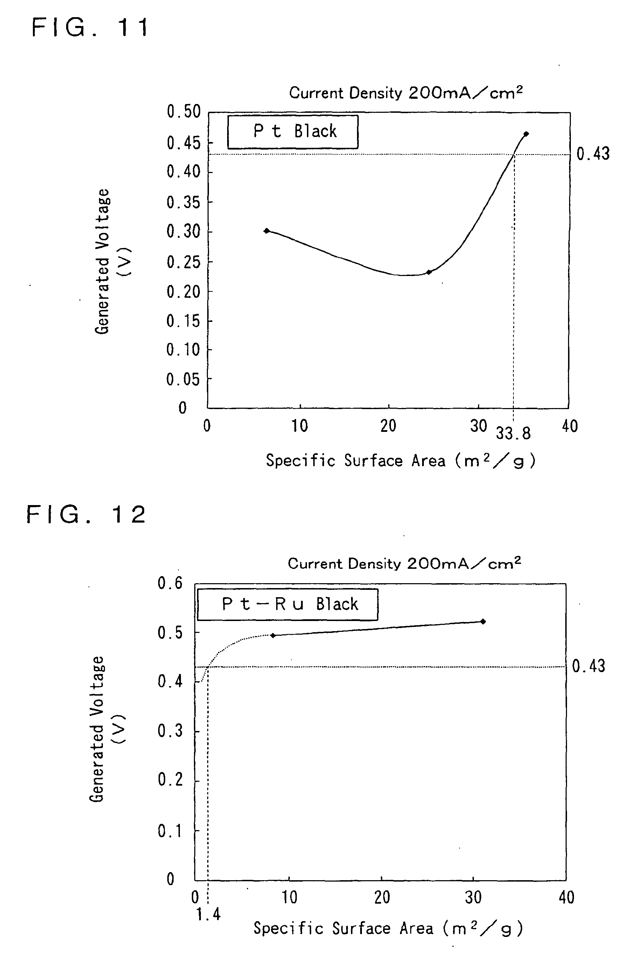

It is seen from FIG. 11 that a higher voltage than the generated voltage obtained by the direct methanol fuel cell (DMFC) was generated by use of Pt black with a specific surface area of not less than 33.8$m^2$/g.

It is seen from FIG. 12 that a higher voltage than the generated voltage obtained by the direct methanol fuel cell (DMFC) was generated by use of Pt-Ru black with a specific surface area of not less than 1.4$m^2$/g.

Example 10 (Examination of metal black having low specific surface area)

1) Production of membrane-electrode conjunction members I-N

Membrane-electrode conjunction members I-N were produced in the same method as the method for producing the membrane-electrode conjunction member A, except that the fuel-side electrodes 2 and the oxygen-side electrodes 3 were formed in the same method as that described above, using various metal blacks shown in TABLE 3 in quantities of metal blacks supported shown in TABLE 3.
In the fuel cell 1 using these membrane-electrode conjunction members I-N, the Ti mesh was used as the power collection member for the fuel-side electrode 2 and the carbon cloth with the gas diffusion layer was used as the power collection member for the oxygen-side electrode 3.

TABLE 3

| Membrane-electrode conjunction member | Fuel·side electrode | | Oxygen-side electrode |
|---|---|---|---|
| | Metal (Specific surface area ($m^2$/g)) | Quantity supported (mg/$cm^2$) | Quantity of Pt supported (mg/$cm^2$) |
| I | Pt black (6.3) | 1.6 | 2.9 |
| J | Pd black (5.9) | 2.0 | 3.0 |
| K | Rh black (8.3) | 0.9 | 3.2 |
| L | Ru black (10.2) | 0.9 | 3.5 |
| M | Ir black (8.0) | 2.1 | 3.0 |
| N | Pt·Ru black (8.3) | 1.84(Pt)/0.98(Ru) | 2.2 |

2) Measurement of Generated Voltage

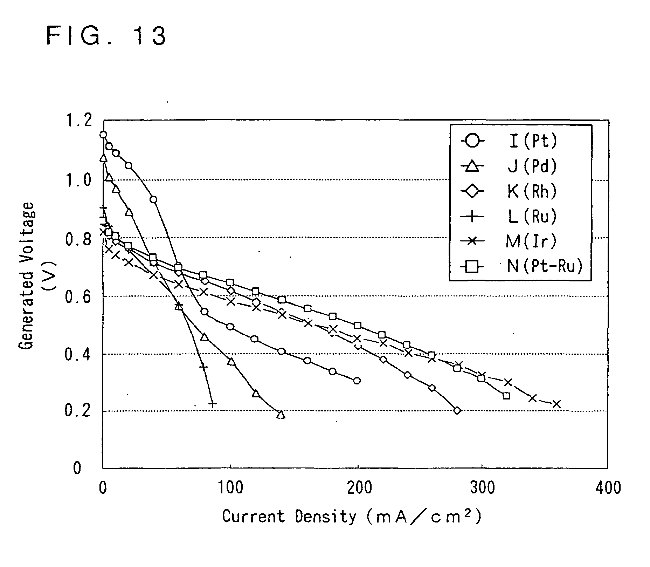

The generated voltage with respect to the current density was measured under the same conditions as those of Example 8 using the membrane-electrode conjunction members I-N produced in the method described above. The results are shown in FIG. 13.
It is seen from FIG. 13 that high voltages were generated in the low current density zone of less than 150mA/$cm^2$ when the metal blacks having low specific surface area, Pt, and Pd, in particular, were used.

Example 11 (Examination of optimum range of specific surface area in low current density zone)

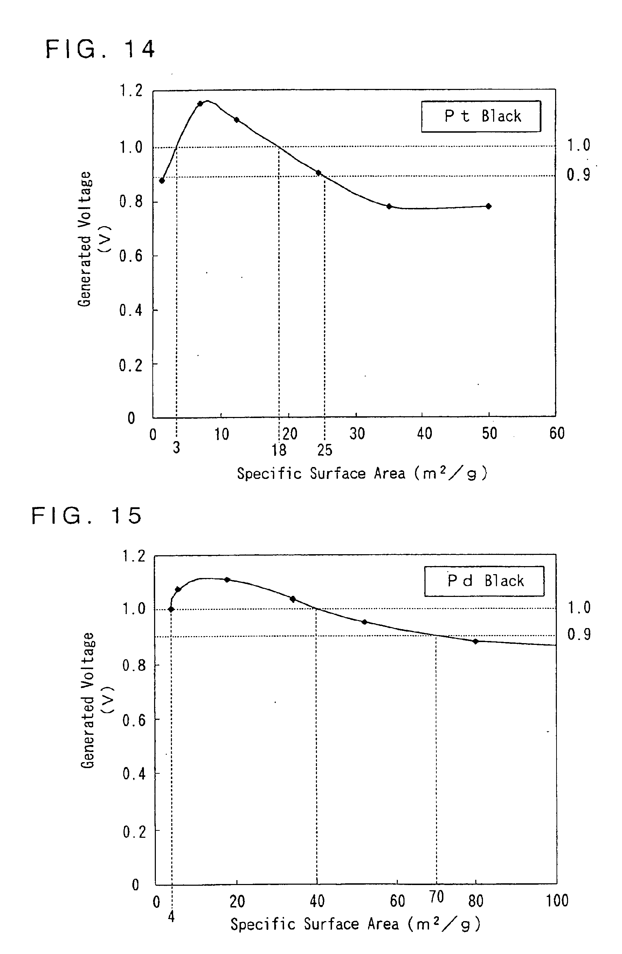

Membrane-electrode conjunction members were produced in the same method as the method of Example 8, using the metal blacks of Pt and Pd having specific surface areas shown in TABLE 4, respectively.
Then, the generated voltages were measured under the same conditions as those of Example 8, except the open-circuit condition, using the membrane-electrode conjunction members produced. The generated voltages with respect to the specific surface areas in the respective metal blacks are shown in FIGS. 14 and 15.
For reference purpose, the generated voltage band of 0.9-1.0V obtained by using hydrogen as the fuel in the open-circuit condition is shown by a dotted line in FIGS. 14 and 15.

TABLE 4

| Metal black | Specific surface area ($m^2$/g) | | | | | |
|---|---|---|---|---|---|---|
| Pt black | 1.3 | 6.3 | 12.4 | 24.5 | 35.0 | 50.0 |
| Pd black | 4.0 | 5.9 | 18.6 | 34.1 | 51.9 | 80.0 |

It is seen from FIG. 14 that a voltage equal to or higher than the generated voltage obtained by the use of hydrogen as the fuel was generated by use of Pt black with a specific surface area of not more than 25$m^2$/g, or preferably 3-18$m^2$/g.
It is seen from FIG. 15 that a voltage equal to or higher than the generated voltage obtained by the use of hydrogen as the fuel was generated by use of Pd black with a specific surface area of not more than 70$m^2$/g, or preferably 4-40$m^2$/g.

While the illustrative embodiments and examples of the present invention are provided in the above description, such is for illustrative purpose only and it is not to be construed restrictively. Variants of the present invention that will be obvious to those skilled in the art is to be covered by the following claims.

Industrial applicability

As seen from the foregoing, the fuel cell of the present invention can be suitably used as the direct fuel-supply fuel cell which is designed to supply the fuel directly to the fuel-side electrode.

**Claims**

1.  A fuel cell which comprises a cell of the fuel cell having a proton-shift medium interposed between a fuel-side electrode and an oxygen-side electrode and is so constructed that a fuel comprising a compound containing at least hydrogen and nitrogen is supplied directly to the fuel-side electrode.

2.  The fuel cell according to Claim 1, wherein the number of carbon of the compound is 3 or less.

3.  The fuel cell according to Claim 1, wherein the compound comprises an element including no carbon.

4.  The fuel cell according to Claim 1, wherein the proton-shift medium is solid, gel, or sol.

5.  The fuel cell according to Claim 1, wherein the fuel comprises a compound including no carbon, and water.

6.  The fuel cell according to Claim 1, wherein the fuel-side electrode includes hydrophilic catalyst.

7.  The fuel cell according to Claim 6, wherein the hydrophilic catalyst is micronized metal.

8.  The fuel cell according to Claim 7, wherein the hydrophilic catalyst is Pt black and/or Pd black and is used in a current density zone of less than $150mA/cm^2$.

9.  The fuel cell according to Claim 8, wherein the hydrophilic catalyst is Pt black having a specific surface area of not more than $25m^2/g$.

10. The fuel cell according to Claim 8, wherein the hydrophilic catalyst is Pd black having a specific surface area of not more than $70m^2/g$.

11. The fuel cell according to Claim 7, wherein the hydrophilic catalyst is at lease one micronized metal selected from the group consisting of Rh, Ir, Pt and Ru and is used in a current density zone of not less than $150mA/cm^2$.

12. The fuel cell according to Claim 11, wherein the hydrophilic catalyst is Rh black having a specific surface area of not less than $9m^2/g$.

13. The fuel cell according to Claim 11, wherein the hydrophilic catalyst is Ir black having a specific surface area of not less than $2.9m^2/g$.

14. The fuel cell according to Claim 11, wherein the hydrophilic catalyst is Pt black having a specific surface area of not less than $33.8m^2/g$.

15. The fuel cell according to Claim 11, wherein the hydrophilic catalyst is Pt-Ru black having a specific surface area of not less than $1.4m^2/g$.

FIG. 1

1

# FIG. 2

Aqueous Solution of Hydrazine:
Relation with Concentration

# FIG. 3

Aqueous Solution of Hydrazine:
Relation with Temperature

## FIG. 4

Aqueous Solution of Hydrazine:
Relation with Pressure

## FIG. 5

Methanol-Aqueous Solution of Hydrazine:
Relation with Concentration

FIG. 6

Aqueous Solution of Ammonia : Relation with Concentration

FIG. 7

FIG. 8

## F I G. 9

Current Density 200mA／cm²

Rh Black

0.43

## F I G. 1 0

Current Density 200mA／cm²

Ir Black

0.43

# FIG. 11

Current Density 200mA/cm²

Generated Voltage (V) vs Specific Surface Area (m²/g)

P t Black

0.43

33.8

# FIG. 12

Current Density 200mA/cm²

Generated Voltage (V) vs Specific Surface Area (m²/g)

P t − R u Black

0.43

1.4

## FIG. 13

FIG. 14

Pt Black

FIG. 15

Pd Black

## INTERNATIONAL SEARCH REPORT

| | International application No. |
|---|---|
| | PCT/JP02/13493 |

**A. CLASSIFICATION OF SUBJECT MATTER**
Int.Cl$^7$ H01M8/06, 8/10, 4/92

According to International Patent Classification (IPC) or to both national classification and IPC

**B. FIELDS SEARCHED**

Minimum documentation searched (classification system followed by classification symbols)
Int.Cl$^7$ H01M8/06, 8/10, 4/86, 4/90-4/92

Documentation searched other than minimum documentation to the extent that such documents are included in the fields searched

| | | | |
|---|---|---|---|
| Jitsuyo Shinan Koho | 1926-1996 | Toroku Jitsuyo Shinan Koho | 1994-2003 |
| Kokai Jitsuyo Shinan Koho | 1971-2003 | Jitsuyo Shinan Toroku Koho | 1996-2003 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | EP 1139476 A2 (Kabushiki Kaisha Equos Research),<br>04 October, 2001 (04.10.01),<br>Par. Nos. [0029] to [0172]; Fig. 1<br>& JP 2001-283875 A & US 2001/0041282 A1 | 1-7,11<br>8-10,12-15 |
| X<br>Y | JP 6-188008 A (Toshiba Corp.),<br>08 July, 1994 (08.07.94),<br>Par. Nos. [0002], [0044] to [0130]; Figs. 1 to 20<br>(Family: none) | 1-7,11<br>8-10,12-15 |
| Y | JP 57-19971 A (Hitachi, Ltd., Hitachi Chemical Co.,<br>Ltd.),<br>02 February, 1982 (02.02.82),<br>Full text<br>(Family: none) | 8-10,12-15 |

| ☒ Further documents are listed in the continuation of Box C. | ☐ See patent family annex. |
|---|---|

| | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 26 March, 2003 (26.03.03) | 08 April, 2003 (08.04.03) |

| Name and mailing address of the ISA/ | Authorized officer |
|---|---|
| Japanese Patent Office | |
| Facsimile No. | Telephone No. |

Form PCT/ISA/210 (second sheet) (July 1998)

## INTERNATIONAL SEARCH REPORT

| International application No. |
|---|
| PCT/JP02/13493 |

C (Continuation).   DOCUMENTS CONSIDERED TO BE RELEVANT

| Category* | Citation of document, with indication, where appropriate, of the relevant passages | Relevant to claim No. |
|---|---|---|
| Y | EP 386764 B1 (N.E. CHEMCAT CORP.),<br>04 August, 1993 (04.08.93),<br>Page 2, lines 12 to 27.<br>& JP 2-236960 A        & US 5024905 A | 8,10,12-13,<br>15 |

Form PCT/ISA/210 (continuation of second sheet) (July 1998)